# EUROPEAN PATENT SPECIFICATION

(11) **EP 2 638 724 B1**
(45) Date of publication and mention of the grant of the patent: **26.09.2018**
(21) Application number: 11715291.8
(22) Date of filing: 21.02.2011
(51) Int. Cl.: H04L 5/00, H04W 88/10, H04W 24/02, H04L 27/26, H04W 8/26

(54) **MULTI-STANDARD RADIO NETWORK NODE CONFIGURATION DATA HANDLING FOR NETWORK OPERATION**
HANDHABUNG VON MULTISTANDARD-FUNKNETZWERKKNOTENKONFIGURATIONSDATEN FÜR EINEN NETZWERKBETRIEB
GESTION DE DONNÉES DE CONFIGURATION DE NOEUD DE RÉSEAU RADIO MULTISTANDARD POUR UN FONCTIONNEMENT DE RÉSEAU

(30) Priority: 12.11.2010 US 413147 P
(43) Date of publication of application: 18.09.2013
(73) Proprietor: Telefonaktiebolaget LM Ericsson (publ), 164 83 Stockholm (SE)
(72) Inventor: KAZMI, Muhammad, S-167 39 Bromma (SE); GHASEMZADEH, Farshid, S-192 48 Sollentuna (SE)
(74) Representative: Hoffmann Eitle
(86) International application number: PCT/SE2011/050189
(87) International publication number: WO 2012/064248

(56) References cited:
- EP-A1- 2 094 024
- WO-A1-2010/051209
- WO-A1-2010/077318
- WO-A1-2010/086498
- WO-A2-2010/087643
- US-A1- 2009 082 002
- US-A1- 2009 227 262
- US-A1- 2009 253 426
- US-A1- 2010 135 272

## Description

### TECHNICAL FIELD

This technology relates to radio communications, and in particularly, to configuration of radio communication networks in which multiple different Radio Access Technologies (RATs) and/or radio frequency carriers are available.

### BACKGROUND

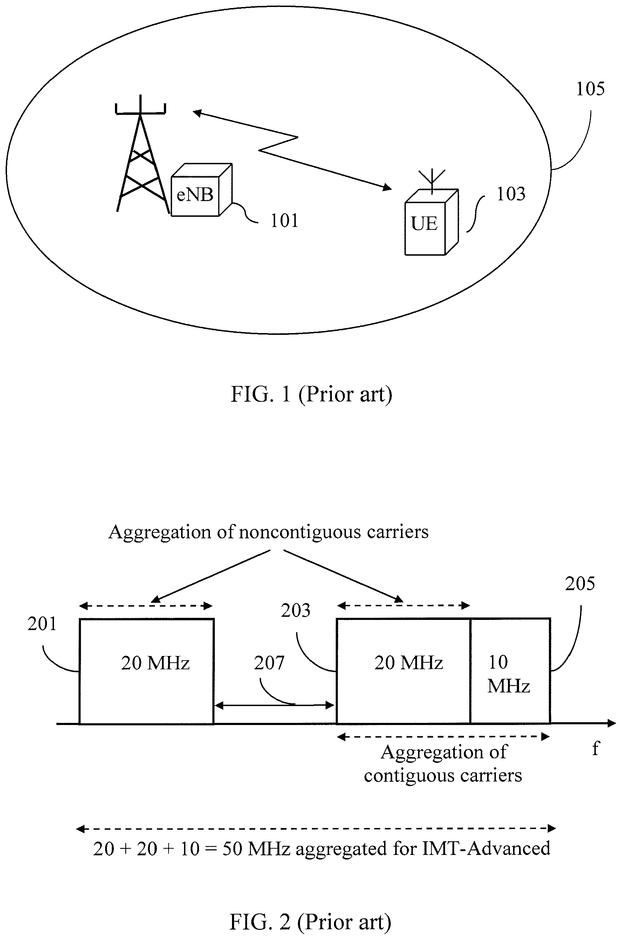

**FIG. 1** shows an illustration of a cellular communication system, or network, with a serving node 101 that serves a User Equipment (UE) 103 located within the serving node's geographical area of service, called a cell 105. Communication is bidirectional between the serving node 101 and the UE 103. The serving node 101 may, depending on the system, be: a Base Station (BS), a Node B, an evolved Node B (eNodeB or eNB), etc. The UE 103 will use a Radio Access Technology to connect and access a cellular communication system via the serving node 101. Today, there are many radio and cellular access technologies and standards such as GSM/GPRS, GSM/EDGE, WCDMA/HSPA, CDMA-based technologies, WiFi, WiMAX, and LTE, to name a few.

Multi-carrier or carrier aggregation may be used to enhance peak-rates within a RAT. For example, it is possible to use multiple 5MHz carriers in a HSPA-based RAT to enhance the peak-rate within the HSPA network. Similarly, there is a plan for LTE release 10 to facilitate aggregation of multiple LTE carriers, e.g., aggregation of multiple 20 MHz carriers. In forthcoming evolutions of cellular systems standards like the Third Generation Partnership Project's (3GPP's) the maximum data rate is sure to be higher than in existing systems. Higher data rates typically require larger system radio spectrum bandwidths. For the International Mobile Telecommunications-Advanced ("IMT-Advanced) system, i.e., the fourth generation mobile communication systems, bandwidths up to 100 MHz are being discussed. A problem being faced is that the radio spectrum is a limited resource that has to be shared by many operators and systems which makes it very complicated to find 100 MHz of free contiguous spectrum that can be allocated.

One method of overcoming the above mentioned problem is aggregating contiguous and non-contiguous spectrum. **FIG. 2** shows an aggregation of two 20 MHz bands 201, 203 and one 10 MHz band 205. The 20 MHz band 203 and the 10 MHz band 205 are contiguous, whereas the 20 MHz band 201 is separated from the 20 MHz and 10 MHz bands 203, 205 by some amount of spectrum 207. The benefit of such a solution is that it becomes possible to generate sufficiently large bandwidths e.g., 50 MHz in the example of FIG. 2, for supporting data rates up to (and above) 1 Gb/s, which is a throughput requirement for a fourth generation ("4G or IMT-Advanced) system. The ability to utilize an aggregation of non-contiguous as well as contiguous bands of the radio frequency spectrum makes it possible for communication system operators to adapt which parts of the radio spectrum will be used based on present circumstances and to geographical position.

For an operator with a certain bandwidth that must deploy two or more RATs, e.g., HSPA and LTE, if the bandwidth offered in the specific or individual RAT technology is limited to part of the given bandwidth, these carrier aggregation approaches within a RAT cannot fully utilize the whole operator bandwidth. To solve this problem, simultaneous use of multiple RATs may be used, i.e., multi-RAT carrier aggregation. Multi-RAT carrier aggregation (CA) is also termed as multi-RAT multi-carrier, inter-RAT CA, inter-RAT multi-carrier etc. For consistency, the term multi-RAT CA is used. A multi-RAT CA scenario may include adjacent carriers and/or non-adjacent cerriers. Non-adjacent carriers may or may not belong to the same frequency band which means that multi-RAT CA may be intra-band i.e., all RATs in same band, or inter-band i.e., at least 2 RATs/carriers in different bands. Non-limiting of other multi-RAT CA scenarios are: 1) LTE and CDMA2000, 2) LTE and GSM, 3) LTE, HSPA, and GSM, etc.

In systems/networks supporting multiple RATs a Multi-Standard Radio (MSR) Base Station (BS) may be used. A MSR BS comprises common Radio Frequency (RF) components (such as power amplifiers, RF filters etc) which can be used to operate more than one RAT or more than one carrier within the same RAT. More specifically the MSR BS is also termed as Multi-Carrier Multi-Standard Radio (MC-MSR) BS due to the fact that it may comprise of single RAT with more than one carrier. Hence single RAT MSR BS is a special case of the MSR BS. Furthermore a special case of MSR BS may also comprise of a BS, which supports single carrier within a RAT i.e. single carrier single RAT MSR BS. Multi-Carrier Multiple RAT (MC-MR) is another term used for the MSR BS. Nonetheless for simplicity and consistency reasons the term MSR BS will be used further on, which refer to any BS which has common radio parts to operate one or more carriers, which in turn may belong to the same or different RATs.

A MSR BS typically supports either Full Duplex Division (FDD) RATs or Time Division Duplex (TDD) RATs i.e. all RATs in one MSR BS are either FDD or TDD. Note that Half Duplex FDD (HD-FDD) is a special case of the FDD. This means HD-FDD (e.g. EDGE/GERAN/GSM) belongs to FDD MSR BS. The HD-FDD may also be supported for certain bands for E-UTRA FDD or for any FDD based technologies. The technology also applies to the MSR supporting any combination of FDD, HD-FDD and TDD RATs.

The FDD Scenarios include a MSR BS supporting one or more of the following RATs: GSM/GERAN/EDGE, UTRA FDD and E-UTRA FDD. The operating frequency bands specified in 3GPP specification are common for the UTRA FDD and E-UTRA FDD technologies. For example both UTRA FDD and E-UTRA FDD can operate in band 1 (2.1 GHz). However all UTRA FDD and E-UTRA FDD bands are not specified for the GSM/GERAN/EDGE operation. Nonetheless some of the GSM/EGDE/GERAN bands are also specified for the UTRA FDD and E-UTRA FDD; examples of such common bands are: UTRA FDD/E-UTRA FDD bands 3 (1800 MHz) and 8 (900 MHz). For simplicity we will use the term GSM, which covers also GERAN, EDGE and other possible GSM evolution.

The FDD MSR scenarios are classified into the following two frequency band categories: MSR frequency Band Category # 1 (BC1): Bands supporting FDD MSR for UTRA FDD and E-UTRA FDD operation e.g. bands 1, 10, 13 etc. MSR frequency Band Category # 2 (BC2): Bands supporting FDD MSR for GSM, UTRA FDD and E-UTRA FDD operation e.g. bands 2, 3, 5, 8 etc.

In the case of MSR BC#2, in accordance with the operator deployment scenario, the MSR BS includes the subset of the RATs can be developed. For example a specific MSR BS based on BC# 2 may support GSM and UTRA FDD in band 2 in case operator uses only these two RATs.

In future the FDD MSR BS may include other introduced FDD technologies. Examples of these scenarios may comprise of any combination of the following FDD / HD-FDD RATs: E-UTRA FDD and 3GPP2 CDMA technologies (e.g. CDMA2000 1x RTT and HRPD); E-UTRA FDD, UTRA FDD and 3GPP2 CDMA technologies (e.g. CDMA2000 1x RTT and HRPD); and, E-UTRA FDD, UTRA FDD, GSM and 3GPP2 CDMA technologies (e.g. CDMA2000 and HRPD). The technology may also apply to MSR BS comprising of other technologies e.g. WiMax, WLAN and their combination with 3GPP and/or 3GPP2 technologies etc.

The TDD scenarios include a MSR BS supporting one or more of the following RATs: UTRA TDD and E-UTRA TDD. The operating frequency bands specified in 3GPP specification are generally common for the UTRA TDD and E-UTRA TDD technologies. For example both UTRA TDD and E-UTRA TDD can operate in band 38 (2.6 GHz). Hence the TDD MSR scenarios are classified into the following frequency band category: MSR frequency Band Category # 3 (BC3): Bands supporting TDD MSR for UTRA FTDD and E-UTRA TDD operation e.g. bands 33, 38, 40 etc.

In view of its common radio circuitry, the MSR BS is required to meet the generic radio requirements, which apply for all RATs and for BS configured for both multi-RAT and single-RAT operation. Non-limiting example of generic radio requirements are unwanted emissions, spurious emissions, out-of-band blocking etc. In addition, there also may be requirements that apply only to certain MSR BS categories/type. For example some of the requirements may be specific to the single RAT GERAN MSR BS. Similarly, modulation quality requirements (e.g. Error Vector Magnitude (EVM)) specific to each RAT needs to be fulfilled by the corresponding RAT.

The MSR BS may have same classes as defined for a non-MSR BS i.e. wide area MSR BS, medium range MSR BS, local area MSR BS and home MSR BS. Different maximum output power levels are used for different BS classes. The wide area MSR BS, medium range MSR BS, local area MSR BS and home MSR BS are typically deployed to serve macro cells, micro cells, pico cells and home/office environments respectively. The MSR BS may also be general purpose BS, which is typically used to serve wide range of environment or hybrid environment. The technology described herein may apply to all types of MSR BS classes.

The MSR BS may also be classified according to whether the carriers in a MSR BS using the common radio parts are contiguous or non-contiguous within the MSR BS bandwidth. Both of the classifications may support different combination of RATs as explained in previous sections.

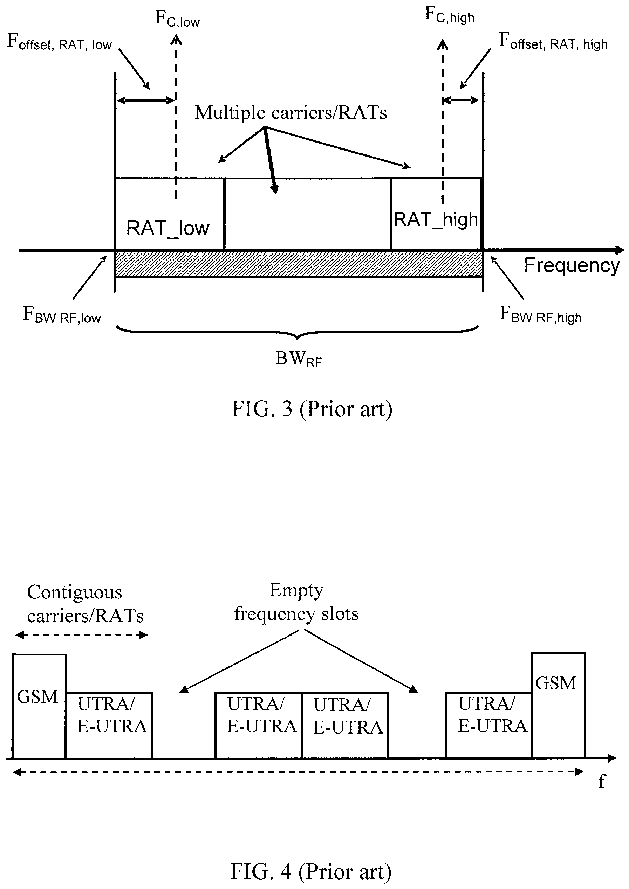

**FIG. 3** shows an example of distribution of multiple carriers/RATs in an example contiguous MSR BS. The symbols shown are defined for example in 3GPP TS37.104. For contiguous MSR, the carriers/RATs are contiguous in the frequency domain.

**FIG. 4** shows an example of distribution of carriers and RATs in a non-contiguous MSR (NC-MSR) BS. As shown, the NC-MSR BS comprises of two or more frequency sub-blocks containing contiguous carriers/RATs separated by empty slots in frequency domain. Each sub-block of frequency consists of contiguous set of carriers, which in turn may belong to the same RAT or to a different RAT. A frequency block may also comprise of carriers belonging to different RATs. For example one frequency block may comprise of GSM carriers and UTRA carriers. Even a sub-block may comprise of contiguous carriers belonging to different RATs. Another operator may operate in empty slot(s). Therefore, emissions in the empty slots need to be maintained below the limit as required by regulatory radio requirements. In NC-MSR, all the carriers/RATs within the overall block of frequency (i.e. the non-contiguous block) share the common radio parts. Hence the generic radio requirements are being defined for all carriers/RATs within the non-contiguous frequency block of NC-MSR.

It should be noted that single RAT BS (e.g. supporting only UTRA FDD or only E-UTRA FDD) may also comprise of non-contiguous carriers. In principle this is a special case of NC-MSR BS, which can also support single RAT scenario in addition to the multi-RAT scenario. The technology described may thus be applied to all these different types of BS which contain non-contiguous carriers or non-contiguous frequency sub-blocks.

Examples of radio nodes other than a BS which may be based on MSR principles are: relay node (which may have different power classes e.g. indoor, pico, thruwall etc), micro, pico and home base-stations, wireless terminal (e.g. user equipment), customer premises equipment (CPE), fixed wireless access (FWA) nodes, repeaters (e.g. Layer-1 and Layer-2 repeaters), wireless devices to assistant location services by receiving signals from and transmitting signals towards target devices (whose location is determined) etc. This means that for instance an MSR relay node may be configured to support any combination of RATs (i.e. can be multi-RATs and/or multi-carrier) e.g. UTRA FDD and E-UTRA FDD. The MSR relay node may also be contiguous or NC-MSR BS.

Furthermore the MSR relay node may be an in-band relay node or an out-band relay node. For an in-band relay node, the backhaul link and the access link operate using the same carrier frequency. For an out-band relay node, the backhaul link and the access link operate using different carrier frequencies. The carrier frequencies may belong to the same or different frequency bands.

The MSR relay node may also be mobile relay (e.g. deployed in a movable vehicle to mainly serve users inside the vehicle and also outside) or a fixed relay node. A wireless terminal may also serve as relay node. A MSR relay node may also support carrier aggregation (CA) or multi-carrier e.g. intra-RAT CA or multi-RAT CA. The MSR relay node may operate in a single hop relay system or in a multi-hop relay system.

The prior art solutions are not sufficient in case of handling MSR BS information, especially in case of non-contiguous MSR BS since a new concept called frequency block has been introduced for non-contiguous MSR BS. An MSR BS may also comprise a single RAT i.e. all carriers belong to the same RAT. In fact single RAT MSR is a special case of MSR BS. Hence a similar concept (i.e. non-contiguous MSR BS) may also be introduced for single RAT non-contiguous UTRA or E-UTRA base station. Thus, there is no clear indication in prior art solutions how to handle network configuration for all different MSR BS implementations.

In particular, it is noted that publications such as U.S. Patent Application Publication No. 2009/0082002, U.S. Patent Application Publication No. 2009/0253426, International Patent Application No. WO 2010/086498, and European Patent Application No. EP 2 094 024 A1 although generally referring to communication of configuration data, disclose only multi-mode network elements in which each RAT has its own radio part, and multiple radio parts supporting different RATs are co-sited. None of these documents contemplates the different configuration parameters that need to be communicated for an MSR node having a common radio part for all supported RATs.

US-A1-2009/0227262 discloses a method and system for configuring a multi-mode base station is disclosed so that a network system may specify a radio access mode for the base station. A configuration control unit inside the base station reports resource capabilities of the base station to a configuration decision unit. The configuration decision unit determines a mode for the base station according to network planning and the reported resource capabilities, generates a configuration file for the base station according to the determined mode, and delivers the configuration file to the base station. The configuration control unit configures relevant resources of the base station according to the received configuration file. The base station sends a configuration request during initial startup to implement automatic configuration.; At daily startup, the base station reports resource capabilities and the existing configuration file to the configuration decision unit to check whether the current configurations are valid.

WO-A1-2010/077318 discloses base stations with coordinated multiple air-interface operations, mode base station (BTS) systems operate with different air interfaces, functionality, or configurations in a coordinated manner, various techniques are provided for system improvements and optimizations via radio resource management, including user and system throughput optimization, QoS improvement, interference management, and various other improvements and optimizations In some embodiments, a system includes a multi-mode communication unit, in which the multi-mode communication unit allocates access for communication using at least two modes, and a processor configured to implement at least in part the multi-mode communications unit In some embodiments, the at least two modes include one or more of the following frequency band, protocol standard, duplexing format, broadcast mode (e g, television broadcast and/or a radio broadcast), and one-way communication mode

### SUMMARY

It is therefore an object of the present disclosure to provide a method in a Multi-Standard Radio (MSR) network node, and a MSR network node itself, which facilitate handling of MSR network node information in a wireless communications system/network. More particularly there is provided a method for network operation of a wireless communications system/network in which there is one or more MSR BSs.

The present invention provides a method in a Multi-Standard Radio network node for network operation as set out in Claim 1.

The present invention also provides a Multi-Standard Radio network node as set out in Claim 2.

The present invention also provides a method in a network node for network operation as set out in Claim 13.

The present invention further provides a network node for network operation as set out in Claim 16.

An advantage achieved by at least some embodiments is to provide mechanisms for handling MSR network node information in a wireless communications network.

Another advantage achieved by some embodiments is to provide a possibility for improved radio resource management and/or network operation e.g. admission control, handover decisions and procedures, or for other purposes such as network planning and network optimization etc.

The foregoing and other objects, features, and advantages will become apparent from the following more particular descriptions of preferred embodiments and aspects. These will be
illustrated by accompanying drawings in which reference characters refer to the same parts throughout various views.

### BRIEF DESCRIPTION OF THE DRAWINGS

The drawings are not necessarily to scale, emphasis instead being placed upon illustrating principles of the disclosure.
- Fig. 1: shows an illustration of a simple cellular communication system.
- Fig. 2: shows an example of aggregation of bands according to prior art.
- Fig. 3: shows an example of distribution of multiple carriers/RATs in an example contiguous MSR BS, according to prior art.
- Fig. 4: shows an example of distribution of carriers and RATs in a non-contiguous MSR (NC-MSR) BS, according to prior art.
- Fig. 5: is a flowchart depicting an example embodiment of a method in a Multi-Standard Radio network node.
- Fig. 6: is a flowchart depicting example embodiments of a method in a network node e.g. a target network node or the at least another network node.
- Fig. 7: is a schematic block diagram illustrating example embodiments of a MSR network node and a network node.

### DETAILED DESCRIPTION

Accordingly, one basic concept of the technology is that a Multi-Standard Radio (MSR) Base Station (BS) or any MSR node reports its configuration data, an identifier identifying the MSR and/or capability information to other network nodes. The other network nodes being for example BSs, a Radio Network Controller (RNC), a BS controller, an O&M node, an OSS node, a SON node, a relay, a donor BS, a core network node, a positioning node etc. The MSR configuration data and/or capability information exchanged between the MSR BS and the other network nodes may further comprise one or more of the following: an indication whether the MSR BS is contiguous MSR BS or non-contiguous MSR BS; a total reception and transmission bandwidth or the size of the frequency block of the receiver and the transmitter of the MSR BS; and/or supported scenarios, i.e. RATs or band category, of the MSR BS supported within a frequency block size or total Bandwidth (BW) of the MSR BS.

The MSR BS configuration data, identifier and/or capability information may be exchanged between the MSR BS and other network nodes either proactively, e.g. at initial setup or when the MSR BS is upgraded/modified, or may be reported by the source MSR BS (MSR network node or first node) to the target network node (second node) upon receiving a request from other network node (third node e.g. MME or O&M etc.). The other network node (third node) may be the same as the target network node (second node) or a different node. In one example the MSR BS sends its configuration data, identifier and/or capability information to a central network node, such as the MME of the LTE network, which forwards the MSR BS information to an eNB node. In another example the MSR BS sends configuration data, identifier and/or capability information directly to other eNBs.

The MSR BS is only one example of MSR network nodes. Other examples of MSR network nodes which sends their identifier, MSR configuration data and/or MSR capability information, are: MSR relays or MSR relay nodes (applies to all classes/types); carrier aggregation capable MSR BSs or MSR relays which may be fixed, mobile or wireless; Multi-Standard Radio Customer Premises Equipments (MSR CPEs); Multi-Standard Radio Fixed Wireless Access (MSR FWA); MSR network nodes assisting in positioning by receiving/transmitting signals; and MSR terminals or MSR terminals acting as relays etc.

Examples of other network nodes (target network nodes) which receives the MSR identifier, MSR configuration data and/or MSR capability information, are: any MSR network nodes e.g. MSR BSs, MSR relays, donor BSs, terminals etc; Radio Network Controllers (RNCs); Base Station Controllers (BSC); any type of a BS e.g. eNodeB or NodeB; non MSR BS; relays; relay nodes; donor BSs or any type of donor radio node; positioning nodes e.g. E-SMLC in LTE; O&M nodes; an OSS node; a SON; any type of node capable of configuring or network planning; a core network node e.g. MME in LTE etc.

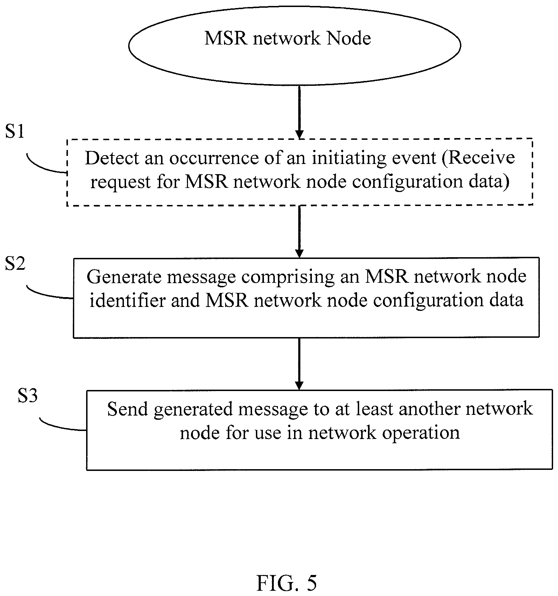

Fig. 5 shows example steps of a method in a MSR network node according to one example of an embodiment. The MSR network node may be considered as a source MSR network node which sends its MSR identifier and/or configuration data to one or more other network nodes (target network nodes). The MSR network node is further being capable of, or configured to, handling multiple Radio Access Technologies, RATs.

As shown by the figure, the method comprises a step of generating **S2** a message comprising an MSR identifier identifying the MSR network node and/or MSR network node configuration data. In one example the MSR network node only send MSR network configuration data since the MSR network node may be identified by other means as being an MSR network node, e.g. according to an implicit reporting principle. In another example the information that the MSR network node is actually a MSR network node may be enough or considered as part of the MSR network node configuration data.

The method mentioned above then comprises another step of sending **S3** the generated message to at least another network node for use in network operation and/or network configuration. The terms network operation and network configuration may be equally used or exchanged at least for some of the preceding and following embodiments. The sending S3 of the generated message to the at least another network node for use in network operation, may be sent in assisting the at least another network node in: handover decisions; admission control; network planning; and/or network optimization.

The generating step S2 mentioned above in relation to Fig. 5 may have been initiated by detection S1 of an occurrence of an initiating event e.g. receiving a request for MSR network node configuration data from the other network node or a central network node. The initiating event may be one or more of the following: time based initiation; receiving a request from the at least another network node to send configuration data; receiving a request from a central network node to send configuration data; initial setup initiated generation; a change of MSR network node cell identifier; and upgrade based initiation.

The generating step S2 may be partly based on an implicit reporting principle achieved by assigning specific identifiers to be used based on specific MSR network node characteristics. The generating step S2 may further comprise generating a message comprising capability information of the MSR network node in one and the same message or in separate messages. The capability information of the MSR network node may comprise at least one of the following: the number of RATs; types of RATs; number of carriers within a RAT in a MSR network node; and, bandwidth of a carrier.

In an example of embodiments, the generating S2 may further comprises generating a message comprising a second identifier, or as may be denoted "an operation identifying whether the MSR network node operates on contiguous or non-contiguous carriers.

In an example of embodiments, the generating S2 may further comprise generating a message comprising information about configured sub-blocks of frequency or spectrum in a non-contiguous MSR network node. The message may be separate message or part of the generated message including an MSR identifier and/or MSR configuration data. The generated information about the configured sub-blocks of frequency or spectrum may comprise at least: the location of each sub-block of frequency in frequency domain; a size of each sub-block; number of carriers in each sub-block; and types of RATs for each carrier in each sub-block etc.

In yet an example of embodiments, the generating step S2 may comprise generating a message comprising a type identifier identifying the type of the MSR network node being: a MSR base station; a MSR terminal; Customer Premises Equipment, CPE; Fixed Wireless Access, FWA; a MSR carrier aggregation base station; a MSR relay node; a MSR donor node; a MSR carrier aggregation capable relay node etc.

In an example of embodiments, all the following set of MSR network node information may be exchanged between the MSR network node (MSR BS) and other network nodes, which also could be MSR network nodes as well, to identify a type and characteristics of the MSR network node. More specifically the MSR network node may signal or send messages including the following information to other network nodes:
- MSR network node capability referring to a set of MSR network node features which are generally static or associated with the hardware design e.g. band category of the MSR, supported RATs, overall frequency block of NC-MSR BS etc.
- MSR network node configuration referring to a set of MSR related parameters which may be modified e.g. number of contiguous sub-blocks in Non Contiguous (NC)-MSR network node. These parameters may be modified by any of the target network node, which is capable of configuring the MSR network node parameters e.g. by OSS, SON etc.
- MSR additional information related to the MSR network node characteristics. The additional information may be signaled separately for uplink and downlink or as one set of information which applies to both uplink and downlink. Examples of additional information characterizing the MSR network node comprises at least one of: NC-MSR frequency block size; information about the configured frequency sub-blocks containing the contiguous carriers within the NC-MSR overall frequency block; supported RATs in contiguous or NC-MSR node etc. The information about the configured frequency sub-blocks in NC-MSR node (i.e. currently configured or activated in a MSR node) may further comprise of the location of the each frequency sub-block in frequency domain, size of each frequency sub-block, number of carriers and types of RATs in each frequency sub-block etc.

In an example of embodiment, the sending of the generated message(s) is performed, may be done during signaling, to distinguish between contiguous MSR network node(s) and non-contiguous MSR network node(s) and may be exemplified as following. According to this embodiment the method in a MSR network node may comprise a step of indicating to one or more other network nodes (target network nodes) whether it is an MSR network node, or not, and further indicating whether the supported MSR operation comprises of the contiguous or non-contiguous carriers/RATs. The method in a MSR network node may further comprise a step of indicating to one or more target network nodes the type of MSR node in terms of its function. For example indicating whether the MSR network node is MSR BS, MSR relay, MSR CA BS, MSR CA capable relay etc.

The above information/indications received in one or more messages enable the at least another network node i.e. target node, to clearly identify whether the sending/signaling network node is an MSR network node or not, whether the MSR network node is contiguous or non-contiguous and the function of the MSR network node e.g. MSR BS or relay etc. Other information as earlier mentioned may also be included.

The received information may then be used by the at least another network node for various purposes. As an example, assume a target BS indicating to one of the BSs serving a terminal, such as a Radio User Equipment (UE) also denoted simply a User Equipment, that it supports NC-MSR BS. The serving BS serving the UE may decide whether to perform a handover to the target BS which is identified to be a NC-MSR BS or not. The information received from the MSR BS may also be used for network planning purposes.

The sending of message(s) (signaling) in at least some of the above mentioned embodiments also applies to distinguish between a contiguous single RAT BS and non-contiguous single RAT BS node i.e. to distinguish between UTRA FDD and NC UTRA FDD BS or relay or any similar network node.

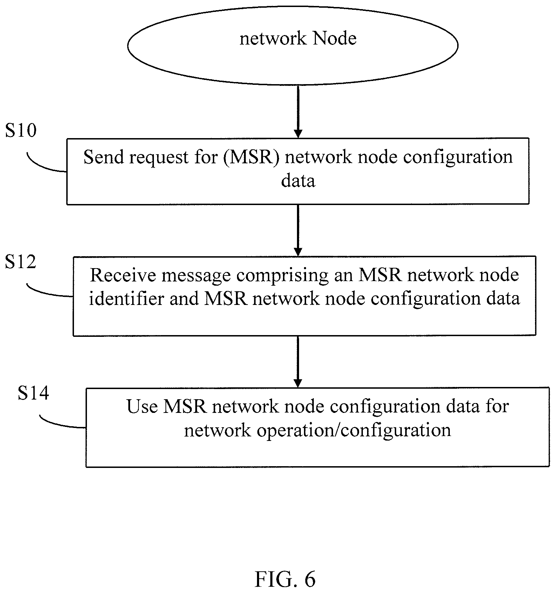

**Fig. 6** is a flowchart depicting a method in a network node e.g. a target node or the at least another network node. This network node may be considered as the requesting or the receiving network node and may be any of the earlier discussed network nodes. The method comprises corresponding steps compared to the method in the MSR network node, only seen as from another side of the network. The method in the network node comprises a step of receiving **S12** a message from an other network node, i.e. the MSR network node, the message comprising an identifier identifying the other network node as the MSR network node and/or MSR network node configuration data. the receiving S12 may done as a response to a request sent **S10** from the network node, for network node configuration data, to another network node. The method in the network node further comprises a step of using **S14** the received message for network operation, and/or network configuration, such as: handover decisions; admission control; network planning; and/or network optimization. In summary the method in a network node mentioned in this section may enhance and improve overall network operation.

In an example of embodiments, the received message may additionally comprise one or more of the following: a MSR identifier; MSR network node configuration data; MSR capability information; Second identifier; information about configured sub-blocks of frequency or spectrum in a non-contiguous MSR network node; and a MSR type identifier.

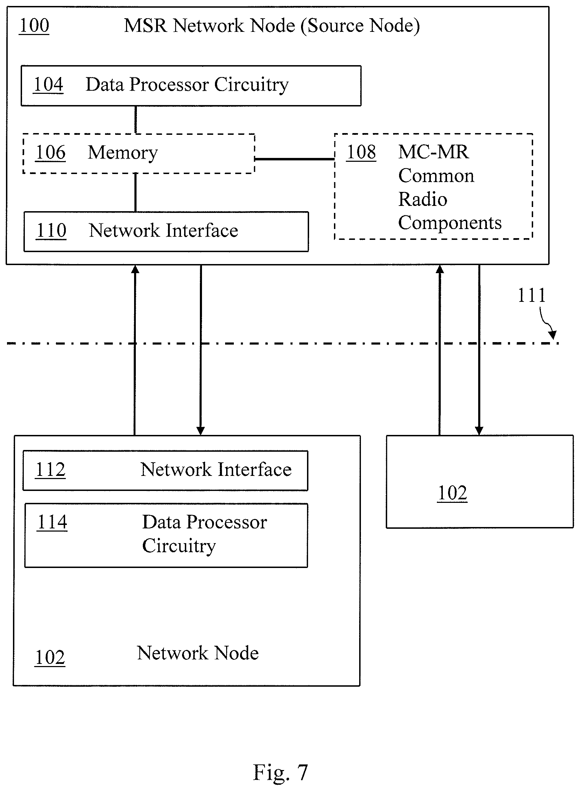

**Fig. 7** is a schematic block diagram illustrating example embodiments of a MSR network node and a network node i.e. the other network node or the target network node. Note, that this is a non-limiting example of a system/network that may implement the steps of the methods mentioned earlier in relation to fig.5 and fig. 6. A MSR network node **100,** may be considered as a source node, communicates with one or more network nodes **102** (only two nodes are shown for simplicity). The MSR network node 100 includes a data processor circuitry **104** (also denoted data processor) coupled to a memory **106,** network interface(s) **110,** and MC-MR common radio circuitry or components **108.** The MC-MR common radio circuitry or components 108 is capable of supporting radio communications over Multiple Carriers (MC) and/or using Multiple Radio Access Technologies (MR, also sometimes denoted MRATs). The memory 106 stores data, and if the data processor circuitry 104 includes a programmed computer the memory 106 stores program instructions for controlling the operation of the programmed computer. The MSR network node 100 is being configured to handle multiple Radio Access Technologies, RATs. Also, the MSR network node 100 may comprise of at least one RAT and at least one carrier within a RAT. The RAT may be one of, or a combination of several, of the following: GSM; LTE FDD; LTE TDD; UTAN FDD; UTRAN TDD; CDMA2000; HRPD etc

The data processor circuitry 104 is configured to generate a message comprising an MSR identifier identifying the MSR network node 100 and/or MSR network node configuration data. The data processor circuitry 104 may also be configured to generate a message partly based on an implicit reporting principle achieved by assigning specific identifiers to be used based on specific MSR network node characteristics.

An example is here given to illustrate an implicit reporting principle. According to this example a network (administrator or standardized parameters) may assign specific identifiers, which are linked to the MSR characteristics. In prior art the network nodes e.g. BS report their identifier to other network nodes. For example assume there are 300 identifiers in total. Out of these 1-200 may be assigned to non MSR network nodes and identifiers 200-300 may be assigned only to MSR network nodes. Furthermore, identifiers 200-250 and 250-300 may be assigned only to contiguous and NC-MSR network nodes respectively. Hence a receiving network node upon receiving a network node identifier, which is assigned based on this principle, may distinguish whether the network node is an MSR network node or not and/or whether the MSR network node is capable of operating with contiguous or non contiguous carriers. Thus, if receiving, at a network node, identifiers 250-300 from another network node it is automatically decided that the transmitting node is a NC-MSR network node.

Implicit reporting principle may be used especially in cases where there is no explicit signaling to report the MSR network node configuration and/or capability information. This is because this method relies on the network planning which is under the control of the network itself. If the generated message is for example configured to comprise other information such as MSR configuration data and/or capability information then the generate message may only partly be based on the implicit reporting principle. The other information cannot be implicitly reported but must be generated in a specific message.

Returning to Fig. 7, the data processor circuitry 104, as mentioned above, may further be configured to generate a message comprising capability information of the MSR network node. The capability information of the MSR network node 100 may comprise at least one of the following: the number of RATs; types of RATs; number of carriers within a RAT in a MSR network node; and, bandwidth of a carrier. The term bandwidth is a general term which refers to any of but not limited to channel bandwidth, RF bandwidth, transmission bandwidth, operating bandwidth, carrier bandwidth etc. For example in LTE the channel bandwidth and RF bandwidth are expressed in MHz e.g. 10 MHz. However the transmission bandwidth is expressed in terms of resource blocks (RBs) e.g. 50 RBs. The data processor circuitry 104 may also further be configured to generate a message comprising a second identifier "an operation identifier identifying whether the MSR network node 100 operates on contiguous or non-contiguous carrier(s).

According to an example of embodiment, the data processor circuitry 104 may be configured to generate a message comprising information about configured sub-blocks of frequency or spectrum in a non-contiguous MSR network node. The generated information about the configured sub-blocks of frequency or spectrum comprises at least: the location of each sub-block of frequency in frequency domain; a size of each sub-block; number of carriers in each sub-block; and types of RATs for each carrier in each sub-block etc.

The data processor circuitry 104 may also be configured to generate a message comprising a type identifier identifying the type of the MSR network node being: a MSR base station; a MSR terminal; Customer Premises Equipment, CPE; Fixed Wireless Access, FWA; a MSR carrier aggregation base station; a MSR relay node; a MSR donor node; a MSR carrier aggregation capable relay node etc.

Additionally, the MSR identifier, the MSR network node configuration data, the capability information, the second identifier, the information about configured sub-blocks of frequency or spectrum in a non-contiguous MSR network node and the type identifier may all be generated in one and the same message or in several messages. This means that the data processor circuitry 104 may generate one message comprising all the above mentioned information/identifiers or several messages to be sent on request or in a sequence upon detection of an initiating event.

The network interface 110 is configured to send generated message(s) to the at least another network node 102 (target network node) for use in network operation and/or in assisting the at least another network node in: handover decisions; admission control; network planning; and/or network optimization. The network interface 110 may be configured to detect an occurrence of an initiating event before the generating of the message e.g. a request from the at least another network node 102 or a request from a central network node. The initiating event may therefore be one or more of the following: time based initiation; receiving a request from the at least another network node to send configuration data; receiving a request from a central network node to send configuration data; initial setup initiated generation; a change of MSR network node cell identifier; and upgrade based initiation.

According to Fig. 7, the MSR network node 100 may be in communication with one or more network nodes 102. Note that hereafter we use one network node to illustrate an example of embodiment. However there is not limitation at all to the number of network nodes that may be used here or the type of network nodes. Examples of a network node are: a relay node; a donor node; a base station; a NodeB; a MSR network node; an evolved NodeB etc. The network node 102 is configured to comprise a network interface **112** configured to receive a message from an other network node 100, the message comprising an identifier identifying the other network node 100 as the MSR network node 100. The message may also, alternatively or in combination, comprise MSR network node configuration data. Implicit reporting of MSR network node identification may not require that the message is generated to include both an MSR identifier and MSR network node configuration data. The network interface 112 is configured to send a request for network node configuration data to the other network node 100.

Continuing with Fig. 7, the network node 102 further comprises a data processor circuitry **114** configured to use the received message for network operation. The received message may comprise one or more of the following: a MSR identifier; MSR network node configuration data; MSR capability information; Second identifier; information about configured sub-blocks of frequency or spectrum in a non-contiguous MSR network node; and a MSR type identifier. The received message may thus be used in network configuring of one or more of the following: handover decisions; admission control; network planning; and/or network optimization. The data processor circuitry 114 may be adapted, or configured, to use part of the received message and then forward the received message via the network interface 112 to a central node e.g. a Mobility Management Entity, MME, or an Operation and Maintenance node, for network operation.

The above set of MSR network node related information signaled by the "source MSR network node 100 (the message(s) generating MSR network node) to the network node 102 is sent over interface(s) **111** between the relevant network nodes. For example in case the "source and "target network nodes are MSR BS and eNode B then the generated message may be signaled, sent or transmitted, over the X2 interface in LTE. In case the source and target network nodes are MSR BS and Radio Network Controller (RNC) node then the generated message may be signaled over the Iub interface in High Speed Packet Access (HSPA). The MSR BS may report its MSR configuration data and other information to a positioning node e.g. Evolved-"Serving Mobile Location (E-SMLC) node in LTE, using a LTE Positioning Protocol Annex (LPPa) protocol. A MSR relay may report its MSR configuration data and other information to a donor BS over relay-donor BS interface e.g. over the Un interface in LTE. A MSR wireless terminal may report MSR related information to a serving radio node, e.g. eNode B, via Radio Resource Control (RRC) signaling, or to a positioning node via RRC signaling, or any other relevant protocol, e.g. report to the E-SMLC via LPP protocol.

As mentioned earlier the MSR network node 100 may report its configuration data and/or capability information to the target network node 102 or to any other node proactively without any explicit request from the target node. For example the MSR network node 100 e.g. MSR BS, may report one or more set of the earlier mentioned information(s) at a time of initial setup or when one or more of its parameters are changed e.g. sub-blocks of frequency in NC-MSR node is increased or decreased, or when the MSR network node 100 is upgraded or downgraded e.g. radio parts are changed to increase the Bandwidth (BW) or frequency block size.

The MSR network node 100 may also report its configuration, capability information and/or other information such as MSR type and MSR operation, to the target network node 102 or to any other node proactively, for example if it notices that new network nodes, e.g. new BS, are introduced into the network or removed form the network. For example the MSR network node 100 may notice this change in case it receives new cell identifier(s) from the other network nodes.

Another scenario under which the MSR network node 100 may also send a generated message report the above mentioned information to other network nodes is when a cell identifier of the MSR network node, e.g. cell ID of MSR BS, is changed. Note that throughout the whole disclosure the term signaling may be considered equal to reporting, sending or transmitting a generated message etc.

In the above description, for purposes of explanation and not limitation, specific details are set forth such as particular architectures, interfaces, techniques, etc. in order to provide a thorough understanding. Thus, for example, it will be appreciated by those skilled in the art that block diagrams of Fig. 7 herein may represent conceptual views of illustrative circuitry or other functional units embodying the principles of the technology. Similarly, it will be appreciated that any flow charts as of Fig. 5- Fig. 6, state transition diagrams, pseudo code, and the like represent various processes which may be substantially represented in computer readable medium and so executed by a computer or processor, whether or not such computer or processor is explicitly shown. Functions of various elements including functional blocks of Fig. 7, including but not limited to those interface, may be provided through the use of hardware such as circuit hardware and/or hardware capable of executing software in a form of coded instructions stored on computer readable medium. Thus, such functions and illustrated functional blocks are to be understood as being hardware-implemented and/or computer-implemented, and thus machine-implemented.

In terms of hardware implementation, the functional blocks of MSR network node 100 or network node 102 may include or encompass, without limitation, Digital Signal Processor (DSP) hardware, reduced instruction set processor, hardware (e.g., digital or analog) circuitry including but not limited to Application Specific Integrated Circuit(s) [ASIC], and (where appropriate) state machines capable of performing such functions.

## Claims

1. Method in a Multi-Standard Radio, MSR, network node (100) for network operation, the network comprising the MSR network node (100) and at least another network node (102) and wherein the MSR network node (100) is capable of handling multiple Radio Access Technologies, RATs, and includes common radio frequency components for all supported RATs, the common radio frequency components including a power amplifier and/or a radio frequency filter, the method comprising:
- generating (S2) a message comprising an MSR network node identifier identifying the MSR network node (100), MSR network node configuration data, MSR network node capability information relating at least in part to RATs supported by the MSR network node (100) and information about configured sub-blocks of frequency or spectrum in a non-contiguous MSR network node, wherein the MSR network node configuration data indicates that the MSR network node (100) supports non-contiguous multi-carrier operation and the information about the configured sub-blocks of frequency or spectrum comprises at least: the location of each sub-block of frequency in frequency domain; a size of each sub-block; number of carriers in each sub-block; and types of RATs for each carrier in each sub-block; and,
- sending (S3) the generated message to the at least another network node (102) for use in network operation.

2. A Multi-Standard Radio, MSR, network node (100) for network operation, the network comprising the MSR network node (100) and at least another network node (102) and wherein the MSR network node (100) is capable of handling multiple Radio Access Technologies, RATs, and includes common radio frequency components for all supported RATs, the common radio frequency components includes a power amplifier and/or a radio frequency filter, the MSR network node (100) comprising:
- a data processor circuitry (104) configured to generate (S2) a message comprising an MSR identifier identifying the MSR network node (100), MSR network node configuration data, MSR network node capability information relating at least in part to RATs supported by the MSR network node (100), and information about configured sub-blocks of frequency or spectrum in a non-contiguous MSR network node, wherein the MSR network node configuration data indicates that the MSR network node (100) supports non-contiguous multi-carrier operation and the information about the configured sub-blocks of frequency or spectrum comprises at least: the location of each sub-block of frequency in frequency domain; a size of each sub-block; number of carriers in each sub-block; and types of RATs for each carrier in each sub-block; and,
- a network interface (110) configured to send (S3) the generated message to the at least another network node (102) for use in network operation.

3. The MSR network node (100) according to claim 2, wherein the network interface (110) is configured to detect an occurrence of an initiating event before the generating of the message, wherein the initiating event is one or more of the following: time based initiation; receiving a request from the at least another network node to send configuration data; receiving a request from a central network node to send configuration data; initial setup initiated generation; a change of MSR network node cell identifier; and upgrade based initiation.

4. The MSR network node (100) according to claim 2, wherein the data processor circuitry (104) is configured to generate a message by assigning specific identifiers to be used based on specific MSR network node characteristics.

5. The MSR network node (100) according to claim 4, wherein the capability information of the MSR network node comprises at least one of the following: the number of RATs; types of RATs; number of carriers within a RAT in a MSR network node; and, bandwidth of a carrier.

6. The MSR network node (100) according to claim 5, wherein the MSR network node comprises of at least one RAT and at least one carrier within a RAT.

7. The MSR network node (100) according to claim 5, wherein the RAT may be one of, or a combination of several, of the following: GSM; LTE FDD; LTE TDD; UTRAN TDD; CDMA2000; HRPD.

8. The MSR network node (100) according to any of claims 2 to 7, wherein the data processor circuitry (104) is further configured to generate a message comprising a second identifier identifying whether the MSR network node operates on contiguous or non-contiguous carriers.

9. The MSR network node (100) according to any of claims 2 to 8, wherein the MSR network node being any of: a MSR base station; a MSR terminal; Customer Premises Equipment, CPE; Fixed Wireless Access, FWA; a MSR carrier aggregation base station; a MSR relay node; a MSR donor node; and a MSR carrier aggregation capable relay node.

10. The MSR network node (100) according to any of claims 2 to 9, wherein the data processor circuitry (104) is further configured to generate a message comprising a type identifier identifying the type of the MSR network node being one of: a MSR base station; a MSR terminal; Customer Premises Equipment, CPE; Fixed Wireless Access, FWA; a MSR carrier aggregation base station; a MSR relay node; a MSR donor node; and a MSR carrier aggregation capable relay node.

11. The MSR network node (100) according to claim 10 when dependent on claims 5 and 8, wherein the MSR identifier, the MSR network node configuration data, the MSR network node capability information, the second identifier, the information about configured sub-blocks of frequency or spectrum in a non-continuous MSR network node and the type identifier, are all generated in one and the same message or in several messages.

12. The MSR network node (100) according to any of claims 2 to 11, wherein the network interface is configured to send the generated message(s) to the at least another network node for use in network operation, in assisting the at least another network node in: handover decisions; admission control; network planning; and/or network optimization.

13. Method in a network node (102) for network operation, the network comprising the network node (102) and a Multi-Standard Radio, MSR, network node (100), wherein the MSR network node (100) is capable of handling multiple Radio Access Technologies, RATs, and includes common radio frequency components for all supported RATs, the common radio frequency communication components includes a power amplifier and/or a radio frequency filter, the method comprising:
- receiving (S12) a message from an other network node (100), the message comprising an identifier identifying the other network node as the MSR network node (100), MSR network node configuration data, MSR network node capability information relating at least in part to RATs supported by the MSR network node (100) and information about configured sub-blocks of frequency or spectrum in a non-contiguous MSR network node, wherein the MSR network node configuration data indicates that the MSR network node (100) supports non-contiguous multi-carrier operation and the information about the configured sub-blocks of frequency or spectrum comprises at least: the location of each sub-block of frequency in frequency domain; a size of each sub-block; number of carriers in each sub-block; and types of RATs for each carrier in each sub-block; and
- using (S14) the received message for network operation.

14. The method according to claim 13, wherein the receiving (S12) is done as a response to a request sent (S10) from the network node (102), for network node configuration data, to the MSR network node (100).

15. The method according to any of claims 13 or 14, wherein the received message comprises one or more of the following: a MSR identifier; MSR network node configuration data; MSR network node capability information; a second identifier identifying whether the MSR network node operates on contiguous or non-contiguous carriers; information about configured sub-blocks of frequency or spectrum in a non-contiguous MSR network node; and a MSR type identifier.

16. A network node (102) for network operation wherein the network comprises the network node and a Multi- Standard Radio, MSR, network node (100), the MSR network node (100) being capable of handling multiple Radio Access Technologies, RATs, and includes common radio frequency components for all supported RATs, the common radio frequency communication components includes a power amplifier and/or a radio frequency filter, the network node (102) comprising:
- a network interface (112) configured to receive a message from another network node (100), the message comprising an identifier identifying the other network node (100) as the MSR network node (100), MSR network node configuration data, MSR network node capability information relating at least in part to RATs supported by the MSR network node (100) and information about configured sub-blocks of frequency or spectrum in a non-contiguous MSR network node, wherein the MSR network node configuration data indicates that the MSR network node (100) supports non-contiguous multi-carrier operation and the information about the configured sub-blocks of frequency or spectrum comprises at least: the location of each sub-block of frequency in frequency domain; a size of each sub-block; number of carriers in each sub-block; and types of RATs for each carrier in each sub-block; and
- a data processor circuitry (114) configured to use (S14) the received message for network operation.

17. The network node (102) according to claim 16, wherein the network interface (112) is configured to send a request for network node configuration data to the other network node (100).

18. The network node (102) according to claim 16 or claim 17, wherein the received message comprises one or more of the following: a MSR identifier; MSR network node configuration data; MSR network node capability information; a second identifier; identifying whether the MSR network node operates on contiguous or non-contiguous carriers; information about configured sub-blocks of frequency or spectrum in a non-contiguous MSR network node; and a MSR type identifier.

19. The network node (102) according to any of claims 16 to 18, wherein the received message is used in network configuring of one or more of the following: handover decisions; admission control; network planning; and/or network optimization.

20. The network node (102) according to any of claims 16 to 19, the network node (102) being a relay node, a donor node, a base station, a NodeB, or an evolved NodeB.

21. The network node (102) according to any of claims 16 to 20, wherein the data processor circuitry (114) is adapted to use part of the received message and forward the received message via the network interface (112) to a central node e.g. a Mobility Management Entity, MME, or an Operation and Maintenance node, for network operation.

## Patentansprüche

1. Verfahren in einem Multistandard-Funk, MSR, - Netzwerkknoten (100) für Netzwerkbetrieb, wobei das Netzwerk den MSR-Netzwerkknoten (100) und mindestens einen anderen Netzwerkknoten (102) umfasst, und wobei der MSR-Netzwerkknoten (100) zum Handhaben mehrerer Funkzugangstechnologien, RAT, imstande ist und gemeinsame Hochfrequenzkomponenten für alle unterstützen RATs umfasst, wobei die gemeinsamen Hochfrequenzkomponenten einen Leistungsverstärker und/oder ein Hochfrequenzfilter umfassen, wobei das Verfahren umfasst:
- Erzeugen (S2) einer Nachricht, die eine MSR-Netzwerkknotenkennung, die den MSR-Netzwerkknoten (100) identifiziert, MSR-Netzwerkknotenkonfigurationsdaten, MSR-Netzwerkknotenfähigkeitsinformation, die wenigstens teilweise mit RATs in Beziehung stehen, die vom MSR-Netzwerkknoten (100) unterstützt werden, und Informationen über konfigurierte Frequenz- oder Spektral-Teilblöcke in einem nichtbenachbarten MSR-Netzwerkknoten umfasst, wobei die MSR-Netzwerkknotenkonfigurationsdaten angeben, dass der MSR-Netzwerkknoten (100) Betrieb mehrerer nichtbenachbarter Träger unterstützt, und die Informationen über die konfigurierten Frequenz- oder Spektral-Teilblöcke wenigstens umfassen: die Position jedes Frequenz-Teilblocks in der Frequenzdomäne; eine Größe jedes Teilblocks; eine Anzahl von Trägern in jedem Teilblock und Typen von RATs für jeden Träger in jedem Teilblock; und
- Senden (S3) der erzeugten Nachricht an den mindestens einen anderen Netzwerkknoten (102) zur Verwendung bei Netzwerkbetrieb.

2. Multistandard-Funk, MSR,-Netzwerkknoten (100) für Netzwerkbetrieb, wobei das Netzwerk den MSR-Netzwerkknoten (100) und mindestens einen anderen Netzwerkknoten (102) umfasst, und wobei der MSR-Netzwerkknoten (100) zum Handhaben mehrerer Funkzugangstechnologien, RAT, imstande ist und gemeinsame Hochfrequenzkomponenten für alle unterstützen RATs umfasst, wobei die gemeinsamen Hochfrequenzkomponenten einen Leistungsverstärker und/oder ein Hochfrequenzfilter umfassen, wobei der MSR-Netzwerkknoten (100) umfasst:
- eine Datenprozessorschaltungsanordnung (104), die so konfiguriert ist, dass sie eine Nachricht erzeugt (S2), die eine MSR-Kennung, die den MSR-Netzwerkknoten (100) identifiziert, MSR-Netzwerkknotenkonfigurationsdaten, MSR-Netzwerkknotenfähigkeitsinformation, die wenigstens teilweise mit RATs in Beziehung stehen, die vom MSR-Netzwerkknoten (100) unterstützt werden, und Informationen über konfigurierte Frequenz- oder Spektral-Teilblöcke in einem nichtbenachbarten MSR-Netzwerkknoten umfasst, wobei die MSR-Netzwerkknotenkonfigurationsdaten angeben, dass der MSR-Netzwerkknoten (100) Betrieb mehrerer nicht benachbarter Träger unterstützt, und die Informationen über die konfigurierten Frequenz- oder Spektral-Teilblöcke wenigstens umfassen: die Position jedes Frequenz-Teilblocks in der Frequenzdomäne; eine Größe jedes Teilblocks; eine Anzahl von Trägern in jedem Teilblock und Typen von RATs für jeden Träger in jedem Teilblock; und
- eine Netzwerkschnittstelle (110), die zum Senden (S3) der erzeugten Nachricht an den mindestens einen anderen Netzwerkknoten (102) zur Verwendung bei Netzwerkbetrieb konfiguriert ist.

3. MSR-Netzwerkknoten (100) nach Anspruch 2, wobei die Netzwerkschnittstelle (110) zum Erkennen eines Auftretens eines Auslöseereignisses vor dem Erzeugen der Nachricht konfiguriert ist, wobei es sich bei dem Auslöseereignis um eines oder mehreres von Folgendem handelt: zeitbasierte Auslösung; Empfangen einer Anforderung von dem mindestens einen anderen Netzwerkknoten zum Senden von Konfigurationsdaten; Empfangen einer Anforderung von einem zentralen Netzwerkknoten zum Senden von Konfigurationsdaten; durch Ersteinrichtung ausgelöste Erzeugung; Änderung der MSR-Netzwerkknoten-Zellenkennung und Upgradebasierte Auslösung.

4. MSR-Netzwerkknoten (100) nach Anspruch 2, wobei die Datenprozessorschaltungsanordnung (104) so konfiguriert ist, dass sie eine Nachricht durch Zuordnen spezifischer Kennungen erzeugt, die basierend auf spezifischen MSR-Netzwerkknotencharakteristiken verwendet werden sollen.

5. MSR-Netzwerkknoten (100) nach Anspruch 4, wobei die Fähigkeitsinformationen des MSR-Netzwerkknotens mindestens eines von Folgendem umfassen: Anzahl von RATs; Typen von RATs; Anzahl von Trägern innerhalb einer RAT in einem MSR-Netzwerkknoten und Bandbreite eines Trägers.

6. MSR-Netzwerkknoten (100) nach Anspruch 5, wobei der MSR-Netzwerkknoten mindestens eine RAT und mindestens einen Träger innerhalb einer RAT umfasst.

7. MSR-Netzwerkknoten (100) nach Anspruch 5, wobei die RAT eine oder eine Kombination mehrerer der folgenden sein kann: GSM; LTE FDD; LTE TDD; UTRAN TDD; CDMA2000; HRPD.

8. MSR-Netzwerkknoten (100) nach einem der Ansprüche 2 bis 7, wobei die Datenprozessorschaltungsanordnung (104) ferner so konfiguriert ist, dass sie eine Nachricht erzeugt, die eine zweite Kennung umfasst, die identifiziert, ob der MSR-Netzwerkknoten auf benachbarten oder nichtbenachbarten Trägern arbeitet.

9. MSR-Netzwerkknoten (100) nach einem der Ansprüche 2 bis 8, wobei es sich bei dem MSR-Netzwerkknoten um eines von Folgendem handelt: eine MSR-Basisstation; ein MSR-Endgerät; eine Benutzereinrichtung, CPE; einen festen Drahtloszugang, FWA; eine MSR-Trägeraggregations-Basisstation; einen MSR-Relaisknoten; einen MSR-Geberknoten und einen MSR-Trägeraggregations-fähiger Relaisknoten.

10. MSR-Netzwerkknoten (100) nach einem der Ansprüche 2 bis 9, wobei die Datenprozessorschaltungsanordnung (104) ferner so konfiguriert ist, dass sie eine Nachricht erzeugt, die eine Typkennung umfasst, die identifiziert, dass es sich beim Typ des MSR-Netzwerkknotens um eines von Folgendem handelt: eine MSR-Basisstation; ein MSR-Endgerät; eine Benutzereinrichtung, CPE; einen festen Drahtloszugang, FWA; eine MSR-Trägeraggregations-Basisstation; einen MSR-Relaisknoten; einen MSR-Geberknoten und einen MSR-Trägeraggregations-fähiger Relaisknoten.

11. MSR-Netzwerkknoten (100) nach Anspruch 10, wenn abhängig von Anspruch 5 und 8, wobei die MSR-Kennung, die MSR-Netzwerkknotenkonfigurationsdaten, die MSR-Netzwerkknotenfähigkeitsinformation, die zweite Kennung, die Informationen über konfigurierte Frequenz- oder Spektral-Teilblöcke in einem nichtbenachbarten MSR-Netzwerkknoten und die Typkennung allesamt in ein und derselben Nachricht oder in mehreren Nachrichten erzeugt werden.

12. MSR-Netzwerkknoten (100) nach einem der Ansprüche 2 bis 11, wobei die Netzwerkschnittstelle so konfiguriert ist, dass sie die erzeugte(n) Nachricht(en) zur Unterstützung des mindestens einen anderen Netzwerkknotens bei Handover-Entscheidungen, Zulassungssteuerung, Netzwerkplanung und/oder Netzwerk-Optimierung an den mindestens einen anderen Netzwerkknoten zur Verwendung bei Netzwerkbetrieb sendet.

13. Verfahren in einem Netzwerkknoten (102) für Netzwerkbetrieb, wobei das Netzwerk den Netzwerkknoten (102) und einen Multistandard-Funk, MSR, - Netzwerkknoten (100) umfasst, wobei der MSR-Netzwerkknoten (100) zum Handhaben mehrerer Funkzugangstechnologien, RAT, imstande ist und gemeinsame Hochfrequenzkomponenten für alle unterstützen RATs umfasst, wobei die gemeinsamen Hochfrequenz-Kommunikationskomponenten einen Leistungsverstärker und/oder ein Hochfrequenzfilter umfassen, wobei das Verfahren umfasst:
- Empfangen (S12) einer Nachricht von einem anderen Netzwerkknoten (100), wobei die Nachricht eine Kennung, die den anderen Netzwerkknoten als den MSR-Netzwerkknoten (100) identifiziert, MSR-Netzwerkknotenkonfigurationsdaten, MSR-Netzwerkknotenfähigkeitsinformation, die wenigstens teilweise mit RATs in Beziehung stehen, die vom MSR-Netzwerkknoten (100) unterstützt werden, und Informationen über konfigurierte Frequenz- oder Spektral-Teilblöcke in einem nichtbenachbarten MSR-Netzwerkknoten umfasst, wobei die MSR-Netzwerkknotenkonfigurationsdaten angeben, dass der MSR-Netzwerkknoten (100) Betrieb mehrerer nicht benachbarter Träger unterstützt, und die Informationen über die konfigurierten Frequenz- oder Spektral-Teilblöcke wenigstens umfassen: die Position jedes Frequenz-Teilblocks in der Frequenzdomäne; eine Größe jedes Teilblocks; eine Anzahl von Trägern in jedem Teilblock und Typen von RATs für jeden Träger in jedem Teilblock; und
- Verwenden der (S14) der empfangenen Nachricht für Netzwerkbetrieb.

14. Verfahren nach Anspruch 13, wobei das Empfangen (S12) in Reaktion auf eine vom Netzwerkknoten (102) an den MSR-Netzwerkknoten (100) gesendete Anforderung (S10) von Netzwerkknotenkonfigurationsdaten erfolgt.

15. Verfahren nach einem der Ansprüche 13 oder 14, wobei die empfangene Nachricht eines oder mehreres von Folgendem umfasst: eine MSR-Kennung, MSR-Netzwerkknotenkonfigurationsdaten, MSR-Netzwerkknotenfähigkeitsinformation, eine zweite Kennung, die identifiziert, ob der MSR-Netzwerkknoten auf benachbarten oder nichtbenachbarten Trägern arbeitet, Informationen über konfigurierte Frequenz- oder Spektral-Teilblöcke in einem nicht benachbarten MSR-Netzwerkknoten und eine MSR-Typkennung.

16. Netzwerkknoten (102) für Netzwerkbetrieb, wobei das Netzwerk den Netzwerkknoten und einen Multistandard-Funk, MSR,-Netzwerkknoten (100) umfasst, wobei der MSR-Netzwerkknoten (100) zum Handhaben mehrerer Funkzugangstechnologien, RAT, imstande ist und gemeinsame Hochfrequenzkomponenten für alle unterstützen RATs umfasst, wobei die gemeinsamen Hochfrequenz-Kommunikationskomponenten einen Leistungsverstärker und/oder ein Hochfrequenzfilter umfassen, wobei der Netzwerkknoten (102) umfasst:
- eine Netzwerkschnittstelle (112), die zum Empfangen einer Nachricht von einem anderen Netzwerkknoten (100) konfiguriert ist, wobei die Nachricht eine Kennung, die den anderen Netzwerkknoten (100) als den MSR-Netzwerkknoten (100) identifiziert, MSR-Netzwerkknotenkonfigurationsdaten, MSR-Netzwerkknotenfähigkeitsinformation, die wenigstens teilweise mit RATs in Beziehung stehen, die vom MSR-Netzwerkknoten (100) unterstützt werden, und Informationen über konfigurierte Frequenz- oder Spektral-Teilblöcke in einem nichtbenachbarten MSR-Netzwerkknoten umfasst, wobei die MSR-Netzwerkknotenkonfigurationsdaten angeben, dass der MSR-Netzwerkknoten (100) Betrieb mehrerer nicht benachbarter Träger unterstützt, und die Informationen über die konfigurierten Frequenz- oder Spektral-Teilblöcke wenigstens umfassen: die Position jedes Frequenz-Teilblocks in der Frequenzdomäne; eine Größe jedes Teilblocks; eine Anzahl von Trägern in jedem Teilblock und Typen von RATs für jeden Träger in jedem Teilblock; und
- eine Datenprozessorschaltungsanordnung (114), die zum Verwenden (S14) der empfangenen Nachricht für Netzwerkbetrieb konfiguriert ist.

17. Netzwerkknoten (102) nach Anspruch 16, wobei die Netzwerkschnittstelle (112) zum Senden einer Anforderung von Netzwerkkonfigurationsdaten an den anderen Netzwerkknoten (100) konfiguriert ist.

18. Netzwerkknoten (102) nach einem der Ansprüche 16 oder 17, wobei die empfangene Nachricht eines oder mehreres von Folgendem umfasst: eine MSR-Kennung, MSR-Netzwerkknotenkonfigurationsdaten, MSR-Netzwerkknotenfähigkeitsinformation, eine zweite Kennung, die identifiziert, ob der MSR-Netzwerkknoten auf benachbarten oder nichtbenachbarten Trägern arbeitet, Informationen über konfigurierte Frequenz- oder Spektral-Teilblöcke in einem nicht benachbarten MSR-Netzwerkknoten und eine MSR-Typkennung.

19. Netzwerkknoten (102) nach einem der Ansprüche 16 bis 18, wobei die empfangene Nachricht beim Netzwerkkonfigurieren einer oder mehrerer der Folgenden verwendet wird: Handover-Entscheidungen, Zulassungssteuerung; Netzwerkplanung und/oder Netzwerk-Optimierung.

20. Netzwerkknoten (102) nach einem der Ansprüche 16 bis 19, wobei der Netzwerkknoten (102) ein Relaisknoten, ein Geberknoten, eine Basisstation, ein Knoten B oder ein evolvierter Knoten B ist.

21. Netzwerkknoten (102) nach einem der Ansprüche 16 bis 20, wobei die Datenprozessorschaltungsanordnung (114) so ausgelegt, dass sie einen Teil der empfangenen Nachricht verwendet und die empfangene Nachricht über die Netzwerkschnittstelle (112) an einen zentralen Knoten, z. B. eine Mobilitätsverwaltungsinstanz, MME, oder einen Betriebs- und Wartungsknoten, für Netzwerkbetrieb weiterleitet.

## Revendications

1. Procédé dans un noeud de réseau radio multinorme, MSR, (100) pour un fonctionnement de réseau, le réseau comprenant le noeud de réseau MSR (100) et au moins un autre noeud de réseau (102) et dans lequel le noeud de réseau MSR (100) est capable de gérer de multiples technologies d'accès radio, RAT, et comprend des composants de radiofréquences communs pour toutes les RAT prises en charge, les composants de radiofréquences communs comprenant un amplificateur de puissance et/ou un filtre de radiofréquences, le procédé comprenant :
- la génération (S2) d'un message comprenant un identifiant de noeud de réseau MSR identifiant le noeud de réseau MSR (100), des données de configuration de noeud de réseau MSR, des informations de capacité de noeud de réseau MSR relatives au moins en partie à des RAT prises en charge par le noeud de réseau MSR (100), et des informations relatives à des sous-blocs configurés de fréquence ou de spectre dans un noeud de réseau MSR non contigu, dans lequel les données de configuration de noeud de réseau MSR indiquent que le noeud de réseau MSR (100) prend en charge un fonctionnement à porteuses multiples non contiguës, et les informations relatives aux sous-blocs configurés de fréquence ou de spectre comprennent au moins : l'emplacement de chaque sous-bloc de fréquence dans le domaine de fréquences ; une taille de chaque sous-bloc ; un nombre de porteuses dans chaque sous-bloc ; et des types de RAT pour chaque porteuse dans chaque sous-bloc ; et
- l'envoi (S3) du message généré à l'au moins un autre noeud de réseau (102) pour une utilisation dans un fonctionnement de réseau.

2. Noeud de réseau radio multinorme, MSR, (100) pour un fonctionnement de réseau, le réseau comprenant le noeud de réseau MSR (100) et au moins un autre noeud de réseau (102) et dans lequel le noeud de réseau MSR (100) est capable de gérer de multiples technologies d'accès radio, RAT, et comprend des composants de radiofréquences communs pour toutes les RAT prises en charge, les composants de radiofréquences communs comprenant un amplificateur de puissance et/ou un filtre de radiofréquences, le noeud de réseau MSR (100) comprenant :
- une circuiterie de processeur de données (104) configurée pour effectuer la génération (S2) d'un message comprenant un identifiant de noeud de réseau MSR identifiant le noeud de réseau MSR (100), des données de configuration de noeud de réseau MSR, des informations de capacité de noeud de réseau MSR relatives au moins en partie à des RAT prises en charge par le noeud de réseau MSR (100), et des informations relatives à des sous-blocs configurés de fréquence ou de spectre dans un noeud de réseau MSR non contigu, dans lequel les données de configuration de noeud de réseau MSR indiquent que le noeud de réseau MSR (100) prend en charge un fonctionnement à porteuses multiples non contiguës, et les informations relatives aux sous-blocs configurés de fréquence ou de spectre comprennent au moins : l'emplacement de chaque sous-bloc de fréquence dans le domaine de fréquences ; une taille de chaque sous-bloc ; un nombre de porteuses dans chaque sous-bloc ; et des types de RAT pour chaque porteuse dans chaque sous-bloc ; et
- une interface de réseau (110) configurée pour effectuer l'envoi (S3) du message généré à l'au moins un autre noeud de réseau (102) pour une utilisation dans un fonctionnement de réseau.

3. Noeud de réseau MSR (100) selon la revendication 2, dans lequel l'interface de réseau (110) est configurée pour détecter une survenance d'un événement de déclenchement avant la génération du message, dans lequel l'événement de déclenchement est l'un ou plusieurs de : un déclenchement basé sur le temps ; la réception d'une demande en provenance de l'au moins un autre noeud de réseau pour envoyer des données de configuration ; la réception d'une demande en provenance d'un noeud de réseau central pour envoyer des données de configuration ; une génération déclenchée par configuration initiale ; un changement d'identifiant de cellule de noeud de réseau MSR ; et un déclenchement basé sur mise à niveau.

4. Noeud de réseau MSR (100) selon la revendication 2, dans lequel la circuiterie de processeur de données (104) est configurée pour générer un message par l'assignation d'identifiants spécifiques à utiliser sur la base de caractéristiques de noeud de réseau MSR spécifiques.

5. Noeud de réseau MSR (100) selon la revendication 4, dans lequel les informations de capacité du noeud de réseau MSR comprennent au moins l'un de : le nombre de RAT ; des types de RAT ; un nombre de porteuses à l'intérieur d'une RAT dans un noeud de réseau MSR ; et une largeur de bande d'une porteuse.

6. Noeud de réseau MSR (100) selon la revendication 5, dans lequel le noeud de réseau MSR comprend au moins une RAT et au moins une porteuse à l'intérieur d'une RAT.

7. Noeud de réseau MSR (100) selon la revendication 5, dans lequel la RAT peut être l'une ou une combinaison de plusieurs de : GSM ; LTE FDD ; LTE TDD ; UTRAN TDD ; CDMA2000 ; HRPD.

8. Noeud de réseau MSR (100) selon l'une quelconque des revendications 2 à 7, dans lequel la circuiterie de processeur de données (104) est en outre configurée pour effectuer la génération d'un message comprenant un deuxième identifiant qui identifie si le noeud de réseau MSR fonctionne sur des porteuses contiguës ou non contiguës.

9. Noeud de réseau MSR (100) selon l'une quelconque des revendications 2 à 8, dans lequel le noeud de réseau MSR est l'un de : une station de base MSR ; un terminal MSR ; un équipement de local de client, CPE ; un accès sans fil fixe, FWA ; une station de base d'agrégation de porteuses MSR ; un noeud de relais MSR ; un noeud de donneur MSR ; et un noeud de relais capable d'une agrégation de porteuses MSR.

10. Noeud de réseau MSR (100) selon l'une quelconque des revendications 2 à 9, dans lequel la circuiterie de processeur de données (104) est en outre configurée pour effectuer la génération d'un message comprenant un identifiant de type qui identifie le type du noeud de réseau MSR comme étant l'un de : une station de base MSR ; un terminal MSR ; un équipement de local de client, CPE ; un accès sans fil fixe, FWA ; une station de base d'agrégation de porteuses MSR ; un noeud de relais MSR ; un noeud de donneur MSR ; et un noeud de relais capable d'une agrégation de porteuses MSR.

11. Noeud de réseau MSR (100) selon la revendication 10 dépendant des revendications 5 et 8, dans lequel l'identifiant MSR, les données de configuration de noeud de réseau MSR, les informations de capacité de noeud de réseau MSR, le deuxième identifiant, les informations relatives à des sous-blocs configurés de fréquence ou de spectre dans un noeud de réseau MSR non continu et l'identifiant de type sont tous générés dans un seul et même message ou dans plusieurs messages.

12. Noeud de réseau MSR (100) selon l'une quelconque des revendications 2 à 11, dans lequel l'interface de réseau est configurée pour envoyer le ou les messages générés à l'au moins un autre noeud de réseau pour une utilisation dans un fonctionnement de réseau, en assistant l'au moins un autre noeud de réseau en ce qui concerne : des décisions de transfert intercellulaire ; un contrôle d'admission ; une planification de réseau ; et/ou une optimisation de réseau.

13. Procédé dans un noeud de réseau (102) pour un fonctionnement de réseau, le réseau comprenant le noeud de réseau (102) et un noeud de réseau radio multinorme, MSR, (100), dans lequel le noeud de réseau MSR (100) est capable de gérer de multiples technologies d'accès radio, RAT, et comprend des composants de radiofréquences communs pour toutes les RAT prises en charge, les composants de communication de radiofréquences communs comprenant un amplificateur de puissance et/ou un filtre de radiofréquences, le procédé comprenant :
- la réception (S12) d'un message en provenance d'un autre noeud de réseau (100), le message comprenant un identifiant qui identifie l'autre noeud de réseau comme étant le noeud de réseau MSR (100), des données de configuration de noeud de réseau MSR, des informations de capacité de noeud de réseau MSR relatives au moins en partie à des RAT prises en charge par le noeud de réseau MSR (100), et des informations relatives à des sous-blocs configurés de fréquence ou de spectre dans un noeud de réseau MSR non contigu, dans lequel les données de configuration de noeud de réseau MSR indiquent que le noeud de réseau MSR (100) prend en charge un fonctionnement à porteuses multiples non contiguës, et les informations relatives aux sous-blocs configurés de fréquence ou de spectre comprennent au moins : l'emplacement de chaque sous-bloc de fréquence dans le domaine de fréquences ; une taille de chaque sous-bloc ; un nombre de porteuses dans chaque sous-bloc ; et des types de RAT pour chaque porteuse dans chaque sous-bloc ; et
- l'utilisation (S14) du message reçu pour un fonctionnement de réseau.

14. Procédé selon la revendication 13, dans lequel la réception (S12) est effectuée en réponse à une demande envoyée (S10) depuis le noeud de réseau (102), pour des données de configuration de noeud de réseau, au noeud de réseau MSR (100).

15. Procédé selon la revendication 13 ou 14, dans lequel le message reçu comprend un ou plusieurs de : un identifiant MSR ; des données de configuration de noeud de réseau MSR ; des informations de capacité de noeud de réseau MSR ; un deuxième identifiant qui identifie si le noeud de réseau MSR fonctionne sur des porteuses contiguës ou non contiguës ; des informations relatives à des sous-blocs configurés de fréquence ou de spectre dans un noeud de réseau MSR non contigu ; et un identifiant de type MSR.

16. Noeud de réseau (102) pour un fonctionnement de réseau, dans lequel le réseau comprend le noeud de réseau et un noeud de réseau radio multinorme, MSR, (100), le noeud de réseau MSR (100) étant capable de gérer de multiples technologies d'accès radio, RAT, et comprenant des composants de radiofréquences communs pour toutes les RAT prises en charge, les composants de communication de radiofréquences communs comprenant un amplificateur de puissance et/ou un filtre de radiofréquences, le noeud de réseau (102) comprenant :
- une interface de réseau (112) configurée pour effectuer la réception d'un message en provenance d'un autre noeud de réseau (100), le message comprenant un identifiant qui identifie l'autre noeud de réseau (100) comme étant le noeud de réseau MSR (100), des données de configuration de noeud de réseau MSR, des informations de capacité de noeud de réseau MSR relatives au moins en partie à des RAT prises en charge par le noeud de réseau MSR (100), et des informations relatives à des sous-blocs configurés de fréquence ou de spectre dans un noeud de réseau MSR non contigu, dans lequel les données de configuration de noeud de réseau MSR indiquent que le noeud de réseau MSR (100) prend en charge un fonctionnement à porteuses multiples non contiguës, et les informations relatives aux sous-blocs configurés de fréquence ou de spectre comprennent au moins : l'emplacement de chaque sous-bloc de fréquence dans le domaine de fréquences ; une taille de chaque sous-bloc ; un nombre de porteuses dans chaque sous-bloc ; et des types de RAT pour chaque porteuse dans chaque sous-bloc ; et
- une circuiterie de processeur de données (114) configurée pour effectuer l'utilisation (S14) du message reçu pour un fonctionnement de réseau.

17. Noeud de réseau (102) selon la revendication 16, dans lequel l'interface de réseau (112) est configurée pour effectuer l'envoi d'une demande pour des données de configuration de noeud de réseau à l'autre noeud de réseau (100).

18. Noeud de réseau (102) selon la revendication 16 ou 17, dans lequel le message reçu comprend un ou plusieurs de : un identifiant MSR ; des données de configuration de noeud de réseau MSR ; des informations de capacité de noeud de réseau MSR ; un deuxième identifiant qui identifie si le noeud de réseau MSR fonctionne sur des porteuses contiguës ou non contiguës ; des informations relatives à des sous-blocs configurés de fréquence ou de spectre dans un noeud de réseau MSR non contigu ; et un identifiant de type MSR.

19. Noeud de réseau (102) selon l'une quelconque des revendications 16 à 18, dans lequel le message reçu est utilisé dans une configuration de réseau d'un ou plusieurs de : des décisions de transfert intercellulaire ; un contrôle d'admission ; une planification de réseau ; et/ou une optimisation de réseau.

20. Noeud de réseau (102) selon l'une quelconque des revendications 16 à 19, dans lequel le noeud de réseau (102) est un noeud de relais, un noeud de donneur, une station de base, un noeud B ou un noeud B évolué.

21. Noeud de réseau (102) selon l'une quelconque des revendications 16 à 20, dans lequel la circuiterie de processeur de données (114) est apte à utiliser une partie du message reçu et à transférer le message reçu par l'intermédiaire de l'interface de réseau (112) à un noeud central, par exemple une entité de gestion de mobilité, MME, ou un noeud de fonctionnement et de maintenance, pour un fonctionnement de réseau.
